# EUROPÄISCHE PATENTSCHRIFT

(11) **EP 1 532 184 B1**
(45) Veröffentlichungstag und Bekanntmachung des Hinweises auf die Patenterteilung: **03.05.2006**
(21) Anmeldenummer: 03797210.6
(22) Anmeldetag: 25.07.2003
(51) Int. Cl.: C08F 289/00, D21H 19/00, C08F 8/00

(54) **TEILVERNETZTE PFROPFPOLYMERE, STREICHMASSE ENTHALTEND DIESE UND DEREN VERWENDUNG**
PARTLY CROSSLINKED GRAFT POLYMERS, COATING SUBSTANCE CONTAINING SAID PARTLY CROSSLINKED GRAFT POLYMERS, AND USE THEREOF
POLYMERES GREFFES PARTIELLEMENT RETICULES, PATE DE COUCHAGE CONTENANT CEUX-CI ET UTILISATION DE CEUX-CI

(30) Priorität: 21.08.2002 DE 10238176
(43) Veröffentlichungstag der Anmeldung: 25.05.2005
(73) Patentinhaber: CTP GmbH, 86830 Schwabmünchen (DE)
(72) Erfinder: BAUMEISTER, Manfred, 86399 Bobingen (DE)
(74) Vertreter: Ackermann, Joachim
(86) Internationale Anmeldenummer: PCT/EP2003/008187
(87) Internationale Veröffentlichungsnummer: WO 2004/026927

(56) Entgegenhaltungen:
- DE-A- 4 108 170
- DE-A- 10 037 845
- DE-A- 19 936 476
- US-A- 4 452 925

## Beschreibung

Die vorliegende Erfindung betrifft eine Streichmasse zur Herstellung bedruckbarer Papiere sowie ausgewählte Polymere, die sich zur Herstellung solcher Streichmassen einsetzen lassen und die Verwendung dieser Polymeren.

Beim Streichen von Papier wird eine Pigment-Bindemittelmischung im Überschuss auf Papier aufgebracht und anschließend wird der Überschuss vorzugsweise mit einem sogenannten Rakelmesser entfernt. Die Geschwindigkeit bei der Dosierung beträgt heute bis 1.800 m/min, wobei zu erwarten sein wird, dass diese Geschwindigkeiten schnell weiter ansteigen werden. Üblicherweise werden Streichmassen (nachstehend auch mit "Streichfarbe" bezeichnet) mit Additiven auf Basis anionischer Polyelektrolyte, wie Carboxymethylzellulose oder copolymeren Polyacrylsäuren auf eine bestimmte Niederscherviskosität eingestellt. In der Praxis zeigt sich jedoch, dass bei höheren Geschwindigkeiten mit diesen sogenannten Rheologiemodifikatoren immer höher Kräfte am Rakelmesser auftreten. Höhere Kräfte führen jedoch zu einer immer höheren Beanspruchung der Papierbahn und damit zu häufigeren Bahnabrissen. Häufigere Bahnabrisse wiederum ergeben verminderte Produktivität, so dass die Vorteile der höheren Geschwindigkeit kompensiert werden. Wird die Streichmasse verdünnt, um die Kräfte am Rakelmesser zu reduzieren, so ergeben sich verschlechterte Abdeckeigenschaften des Striches und damit verschlechterte Bedruckbarkeit des Papiers.

Eine weitere Möglichkeit zur Reduktion der Anpresskräfte am Rakel besteht im Einsatz von ausschließlich natürlichem gemahlenem Calciumcarbonat als alleinigem Pigment, an Stelle von Calciumcarbonat- / Kaolin-Mischungen.

Natürliche Calciumcarbonate weisen einen geringeren Formfaktor, d.h. Dicken- /Längenverhältnis des Pigments von ca. 1:2 auf, verglichen mit 1:12 bis 1:50 bei Streichkaolinen. Bei alleinigem Einsatz von natürlichen Calciumcarbonaten wird eine schlechte Abdeckung der Papieroberfläche erreicht. Gleichzeitig kommt es zu einer verstärkten Druckfleckigkeit, die durch ungleichmäßige Druckfarbenannahme der gestrichenen Oberfläche entsteht.

Die rheologischen Probleme bei höheren Geschwindigkeiten entstehen durch in der Streichmasse gebildete Agglomerationsstrukturen der dispersen Phase. Dabei entstehen elastische Partikelnetzwerke, welche sich bei hohen Deformationsgeschwindigkeiten wie Festkörperteilchen verhalten. Die elastischen Partikelnetzwerke sind für die hohen Deformationskräfte am Rakel verantwortlich.

Die Bildung der Netzwerke erfolgt durch eine Ordnungsstruktur mit Kristallähnlichem Verhalten in Lösungen von Polyanionen. In Lösungen von Carboxymethylzellulose oder neutralisierten Polyacrylsäuren entstehen über Gegenionen verknüpfte regelmäßige Strukturen, welche sich durch Röntgenkleinwinkelstreuung in Form einer messbaren Bragg-Konstante bestimmen lassen. Werden derartige Lösungen mit Pigmenten und Binderdispersionen gemischt, kommt es zu einer Störung des Ordnungszustands. Pigmente und Binderdispersionen werden in Domänenbereiche konzentriert, wobei infolge des verminderte Partikelabstandes eine starke Zunahme der anziehenden Kräfte zwischen den Partikeln auftritt. Die gebildeten Domänen verhalten sich deshalb wie elastische Strukturen, die erst bei sehr hohen Kräften Fließen zeigen.

Bei der Herstellung von natürlichen Carbonaten werden Polyacrylate als Mahlhilfsmittel und Dispergiermittel eingesetzt. Diese anionischen Polyacrylate zeigen ebenfalls vorstehend beschriebenen Effekt. Die Agglomeration von Feinteilchen ergibt ungünstigere Rheologie vor allem jedoch im fertigen Strich infolge unterschiedlichen Porendurchmessers ungleichmäßige Farbannahme.

Aus der DE-A-100 37 845 sind Streichfarben sowie Komponenten zu deren Herstellung bekannt, mit denen sich eine Qualitätsverbesserung der hergestellten Papiere sowie eine Verbesserung der Verarbeitungseigenschaften erreichen lässt.

Diese vorbekannten Streichfarben genügen insbesondere bei schnelllaufenden Verarbeitungsmaschinen noch nicht allen Ansprüchen.

Mit der vorliegenden Erfindung wird eine weitere Verbesserung der Verarbeitungseigenschaften von Streichfarben erzielt, so dass sich diese problemlos bei Geschwindigkeiten sogar oberhalb von 1.800 m/sec verarbeiten lassen. Das verbesserte rheologische Verhalten erlaubt es bei sehr hohen Geschwindigkeiten zu fahren, ohne dass die sonst notwendige Verdünnung der Streichfarbe erforderlich ist. Die Verdünnung der Streichfarbe ist üblicherweise notwendig, um die an dem/den Dosierelementen auftretenden Kräfte noch beherrschen zu können. Als Nachteil dieser Fahrweise kommt es zu einer schlechteren Oberflächenabdeckung und damit verschlechterten Glanz/Glättewerten sowie Bedruckbarkeitseigenschaften des Papiers.

Mit der nachstehend beschriebenen Erfindung wird die Möglichkeit geschaffen, die beschriebenen Nachteile des Standes der Technik zu vermeiden.

Es wurde nun gefunden, dass mit aminogruppenhaltigen Monomeren gepfropfte Proteine, die teilvemetzt worden sind, die Rheologie von Streichfarben, insbesondere im Hochgeschwindigkeitsbereich, günstig beeinflussen.

Bei den erfindungsgemäßen Verbindungen handelt es sich um komplexe Polymere, welche Lewis Basengruppen, d.h., starke Elektronendonorgruppen aufweisen.

Die vorliegende Erfindung betrifft Pfropfpolymere, die sich von Proteinen ableiten, die mit ethylenisch ungesättigten Monomeren, die Amid- und/oder Aminogruppen enthalten, gepfropft worden sind und die mit einer polyfunktionellen Epoxidverbindung und/oder einer polyfunktionellen Aziridinverbindung und/oder Trichlortriazin und/oder Dichlorhydroxytriazin teilvemetzt sind.

Derartige Pfropfpolymere sind starke Lewis-Basen (Elektronen-Donatoren) und besitzen eine ausgeprägte Tendenz zum Anhaften an die Pigmentteilchen. Es wurde gefunden, dass diese Pfropfpolymeren die Pigmentteilchen umhüllen und eine Stabilisierung der Pigmentdispersion, insbesondere bei feinteiligen Pigmenten, bewirken.

Beispiele für bevorzugte Polymere sind Proteine, wie Sojaprotein, Kasein und bevorzugt Gelatine, die mit Acrylsäureamiden bzw. Methacrylsäureamiden oder mit Acrylsäureaminoalkylestem bzw. Methacrylsäureaminoalkylestern oder mit Gemischen dieser Monomeren gepfropft worden sind und die teilvemetzt worden sind.

Besonders günstige Ergebnisse werden erhalten, wenn die erfindungsgemäß gepfropften, teilvernetzten und aminogruppenhaltigen Polymeren sich von einer besonders steifen und damit gestreckten Polymerkette als Pfropfgrundlage ableiten.

Gestreckte Polymerketten finden sich z.B. in Kollagenstrukturen, wie

-CH₂-NH-CO-CH₂- ↔ -CH₂-NH⁺=CO⁻CH₂-

Durch mesomere Strukturen wird eine höhere Kettensteifigkeit erreicht. Die Bildung von Wasserstoffbrücken zwischen den Polymerketten erhöht ebenfalls die Steifigkeit der erhaltenen Polymerstrukturen. Polymerketten mit sehr hoher Kettensteifigkeit zeigen besonders gutes Adsorptionsvermögen an der Oberfläche von Partikeln aus natürlichem Calciumcarbonat.

Teilvemetzte Kollagene, z.B. Gelatinen mit einem hohen Bloomwert von 240 bis 270, zeigen deshalb überraschenderweise starken Abbau der Strukturen in Calciumcarbonatdispersionen. Die Domänen- oder Strukturbildung in Calciumcarbonatdispersionen lässt sich durch Messung des sogenannten viskoelastischen, plastischen Fließanteils beurteilen. Bei der Bestimmung des viskoelastischen Fließanteils wird die Festigkeit der gebildeten makroskopischen Strukturen mittels eines oszillierenden Rotationsviskosimeters bestimmt, z.B. wird bei einer Messfrequenz von einem Hertz mit zunehmender Amplitude gemessen, bis es zu einer Überschreitung der Festigkeit der gebildeten Strukturen kommt.

Die erfindungsgemäßen Polymere können Aminogruppen aufweisen; dabei kann es sich um tertiäre aber insbesondere um primäre und/oder sekundäre Aminogruppen handeln.

Die erfindungsgemäßen Polymere können Amidgruppen aufweisen; dabei kann es sich um tertiäre aber insbesondere um primäre und/oder sekundäre Amidgruppen handeln.

Weitere Beispiele für bevorzugte Polymere sind Proteine, wie Sojaprotein und bevorzugt Gelatine, die mit Lactamen enthaltend ethylenisch ungesättigte Gruppen, wie N-Vinylcaprolactam oder N-Vinylpyrrolidon oder mit Gemischen dieser Monomeren gepfropft worden sind und die teilvernetzt worden sind.

Ganz besonders bevorzuge Polymere sind mit amidgruppenhaltigen und/oder aminogruppenhaltigen ethylenisch ungesättigen Monomeren gepfropfte und teilvernetzte Gelatinen.

Als Vemetzer werden polyfunktionelle, wasserlösliche oder wasserdispergierbare Epoxidverbindungen und/oder polyfunktionelle, wasserlösliche oder wasserdispergierbare Aziridinverbindungen und/oder Trichlortriazin (Cyanurchlorid) und/oder Dichlorhydroxytriazin eingesetzt. Dabei kann es sich um di-, tri-, tetrafunktionelle oder noch höher funktionelle Epoxid- bzw. Aziridinverbindungen handeln.

Beispiele für Vernetzer sind Polyglycidether (= Polyether mit Resten des 1,2-Propanoxirans) abgeleitet von zwei-, drei- oder vierwertigen Alkoholen oder Phenolen.

Als Beispiele seien genannt der Di- oder Triglycidether des Glycerins, Diglycidether des Ethylenglykols, des Bisphenols A, des Bisphenols F oder des Hydrochinons.

Weitere Beispiele sind Polyglycidether des Pentaerythrits, Trimethylolpropans, Sorbits oder Mannits.

Die Vemetzungsdichte ist dabei so zu wählen, dass das entstehende teilvernetzte Pfropfpolymer seinen Zweck als Schutzkolloid für die Pigmentteilchen der Streichfarbe noch zu erfüllen vermag. Das Produkt muss also wasserlöslich bleiben oder zumindest in Wasser dispergierbar sein. In der Regel wird die Vernetzungsdichte dabei so gewählt, dass maximal 1,5 Gewichtsteile eines multifunktionellen Vernetzers, insbesondere eines Glycidethers, wie Pentaerythrittetraglycidether, auf 100 Gew. Teile Pfropfpolymer eingesetzt werden.

Bei den bevorzugt als Propfgrundlage eingesetzten Gelatinen beträgt das Gewichtsverhältnis von amidgruppenhaltigem ethylenisch ungesättigem Monomeren zu Gelatine bis zu 1 : 1, vorzugsweise 0,1-1 :1.

Neben den A-Typen (Säure-Typen) der Gelatine werden vorzugsweise B-Typen (Base-Typen) als Pfropfgrundlage eingesetzt. Besonders bevorzugt werden Gelatine-Typen mit einem Bloom-Wert oberhalb von 200, vorzugsweise von 240 bis 300, insbesondere 240 bis 270, eingesetzt.

Beispiele für ethylenisch ungesättigte amidgruppenhaltige Monomere zum Propfen der Gelatine oder der anderen Protein-Pfropfgrundlagen sind Amide der Acrylsäure und/oder der Methacrylsäure, N-Vinylamide, wie N-Vinylpyrrolidon, oder N-Vinyllactame, wie N-Vinylcaprolactam.

Die Pfropfreaktion wird im allgemeinen in wässriger Phase und unter Verwendung an sich bekannter Initiatoren durchgeführt, beispielsweise des Redoxpaares Peroxodisulfat / Natriumdithionit. Bei der Reaktionsführung ist darauf zu achten, dass Propfpolymer mit keiner oder nur geringer Vernetzung erhalten wird, das in einem anschließenden Schritt mit polyfunktionellen Epoxidverbindung so weit teilvernetzt wird, dass das erhaltene Polymer ausreichend löslich bleibt, um als Schutzkolloid für die Pigmentteilchen dienen zu können.

Sehr gute Ergebnisse werden erhalten, wenn die Pfropfung in Gegenwart von Harnstoff oder einer ähnlich wirkenden Substanz, wie z.B. Guanidinsalz, Dicyandiamid oder Melamin durchgeführt wird. Dabei wird einerseits die Gelatine gelöst, aber auch die gewünschte, gut lösliche gepfropfte Gelatine erhalten. Der Löslichkeitsvermittler, wie der Harnstoff wird dabei im Gewichtsverhältnis 1 : 1 zur Gelatine zugegeben oder in leichtem Überschuss.

Besonders bevorzugt sind teilvernetzte und mit N-Vinyllactamen, besonders mit N-Vinylpyrrolidon und ganz besonders bevorzugt mit N-Vinylcaprolactam gepfropfte Gelatinen.

Die Erfindung betrifft ferner Streichmassen für bedruckbare Papierbahnen in Form einer wässrigen Dispersion von Pigmenten und Hilfsstoffen mit einem Feststoffanteil von 50 bis 80 Gew.%, worin die Streichmasse mindestens ein oben definiertes teilvemetztes Pfropfpolymeres enthält.

Bevorzugt werden Streichmassen, deren Pigmentteilchen von teilvernetzten Pfropfpolymeren umhüllt sind, die sich von Sojaprotein, Kasein und bevorzugt Gelatine ableiten und mit ethylenisch ungesättigten Monomeren, die Amid- und/oder Aminogruppen enthalten, gepfropft worden sind.

In vielen Streichfarben werden lösliche und Hydroxylgruppen enthaltende Polymere, z.B. Polyvinylalkohol oder Stärke, als Aufhellerträger und Binder eingesetzt.

Polyvinylalkohol vor allem vollverseifter Polyvinylalkohol, ebenso wie Stärken, neigen jedoch zur Ausbildung von Gelstrukturen infolge der intramolekularen Ausbildung von Wasserstoffbrücken.

Infolge dieses Vorgangs baut sich in der Formulierung ein noch viskoelastischer Fließanteil auf, der bei etwas längerer Lagerdauer der Streichfarbe stark zunimmt und zu sehr hohen Anpresskräften am Rakel führt.

Es wurde nun gefunden, dass der Einsatz von polymeren Lewisbasen in Form der oben beschriebenen teilvernetzten Pfropfpolymeren, insbesondere auf Basis von Polyvinylpyrrolidon, den Aufbau viskoelastischer Strukturen verhindert oder abbremst.

Die polymere Lewisbase baut Interaktionen bzw. polymere Komplexe mit Polyvinylalkohol auf, so dass die Aggregation der Polyvinylalkoholketten verlangsamt wird.

Überraschenderweise wurde nun gefunden, dass der Einsatz eines teilvernetzten Proteins, insbesondere einer teilvernetzten Gelatine, mit den oben beschriebenen gepfropften Einheiten, insbesondere mit gepfropften Poly-N-vinylcaprolactamgruppen, es ermöglicht, Domänenstrukturen in der Pigmentdispersion abzubauen, d.h. niedrigere Anpressdrucke zu erreichen und gleichzeitig über die Bildung von Polymerkomplexen mit Polyvinylalkohol, dieses Polymer verstärkt an der Oberfläche des Pigments zu binden.

Die Gesamtviskosität der Formulierung sinkt, wobei der plastische Fließanteil leicht steigt. Die Erhöhung des plastischen Fließanteils bestätigt die adsorptive Aufweitung des Partikeldurchmessers durch Adsorption von Polyvinylalkohol und damit den stärkeren dissipativen Energieabbau infolge von Flüssigkeitsreibung.

Bevorzugt sind Streichmassen, die als Pigment Kaolin oder insbesondere bevorzugt Calciumcarbonat, ganz besonders bevorzugt natürliches Calciumcarbonat enthalten.

Ganz besonders bevorzugt wird Calciumcarbonat mit einem hohen Anteil an Feinstteilchen, insbesondere mit einem Gewichtsanteil von 90 bis 99 % an Teilchen mit einem Durchmesser von weniger als 2 µm. Derartige Pigmente werden bei der Herstellung von bedruckbaren Papieren mit besonders hohem Glanz eingesetzt.

Ganz besonders bevorzugt sind Streichmassen, die 0,1 bis 1,0 Gewichts-Prozent, bezogen auf den Feststoffanteil, der oben definierten teilvernetzten Pfropfpolymeren, insbesondere einer teilvernetzten gepfropften Gelatine enthalten, bevorzugt ist dabei der Bereich von 0,2 bis 0,5 Gew.%.

Die erfindungsgemäßen Streichfarben enthalten noch weitere Hilfs- bzw. Zuschlagstoffe.

Beispiele für Hilfs- bzw. Zuschlagstoffe sind Bindemittel, wie Styrol-Butadien Dispersionen oder Styrol-Acrylat Dispersionen, die typischerweise in Mengen von 5 bis 20 Gew.%, bezogen auf die Menge des Pigments, eingesetzt werden.

Weitere Beispiele für Hilfs- bzw. Zuschlagstoffe sind wasserlösliche Polymere, wie Stärke, Polyvinylalkohol oder Carboxymethylcellulose, die typischerweise in Mengen von 0,1 bis 10 Gew.%, bezogen auf die Menge des Pigments, eingesetzt werden. Ferner können die erfindungsgemäßen Zusammensetzungen optische Aufheller, wie 4,4'-Diaminostilben-disulfonsäurederivate, enthalten, die typischerweise in Mengen von 0,1 bis 2 Gew.%, bezogen auf die Menge des Pigments, eingesetzt werden.

Weitere an sich übliche Zusätze sind Konservierungsmittel, Dispergiermittel, wie Natriumpolyacrylate, Gleitmittel, wie langkettige Natrium-, Ammonium- oder Calciumcarboxylate, z.B. Stearate, die typischerweise in Mengen von 0,3 bis 1,5 Gew.%, bezogen auf die Menge des Pigments, eingesetzt werden; oder Entschäumer, Entlüfter oder pH-Regulatoren, wie Natronlauge oder Ammoniak, die typischerweise in Mengen von 0,01 bis 0,05 Gew.%, bezogen auf die Menge des Pigments, eingesetzt werden; oder Vemetzer bzw. Härtungsmittel für das Bindemittel, wie Melamin-Formaldehyd-Harze, Harnstoff-Formaldehyd-Harze, Glyoxal bzw. Glyoxalderivate oder Polyglycidether.

Die erfindungsgemäße Streichmasse erhält als Dispergiermittel üblicherweise Wasser.

Die Viskosität nach Brookfield, gemessen mit einer Spindeldrehzahl von 100 min⁻¹ liegt für die erfindungsgemäßen Streichmassen typischerweise im Bereich von 300 bis 1.500 mPa sec, gemessen mit Spindel 3 bzw. 4 bei 20°C.

Die erfindungsgemäße Streichmasse bewährt sich besonders bei Streichmassen mit einem hohen Anteil an feinen Pigmenten, die sonst häufig zur Streifenbildung und zu geringerem Glanz auf dem Papier führen. Sie eignet sich deshalb besonders für Calciumcarbonat, das zu weißeren Papieren führt, aber bei Streichmassen nach dem Stand der Technik durch einen hohen Anteil an Feinstteilchen zu Verarbeitungsschwierigkeiten führen kann.

Die erfindungsgemäßen Streichmassen ergeben beim Vorstrich einen besseren Strichstand in Verbindung mit weniger Wasserverlust ins Rohpapier. Der Rakeldruck ist deutlich verringert und führt zu besseren Laufeigenschaften. Diese Streichmassen mit hoher Strukturviskosität decken deutlich besser ab und ergeben eine gleichmäßige Fixierung des Deckstriches. Der verbesserte Vorstrich führt zu einer gleichmäßigeren Farbannahme des deckgestrichenen Papiers mit weniger Druckfleckigkeit.

Ein weiterer Vorteil der erfindungsgemäßen Streichmassen liegt darin, daß eine deutlich geringere Abhängigkeit des Glanzes von der Höhe des Auftrags festzustellen ist. Dadurch werden produktionsbedingte Auftragsschwankungen weniger sichtbar.

Die optimale Pigmentpackung führt zu hohem Glanz. Die so hergestellten Papiere weisen eine deutlich verbesserte Glätte und eine höhere Weisse auf. Am bedruckten Papier ergibt sich ein höherer Druckglanz und eine gleichmäßigere Bedruckbarkeit.

Die Erfindung betrifft auch die Verwendung der oben definierten teilvernetzten Pfropfpolymeren als Schutzkolloide für Pigmentteilchen.

Die Vorteile der vorliegenden Erfindung werden in den folgenden Beispielen weiter erläutert, ohne dass dieses eine Einschränkung darstellen soll.

### Beispiel 1:

70 Teile einer durch saure Hydrolyse hergestellten Gelatine mit einem Bloomwert von 240 wurden in 560 Teile Wasser gelöst Nach dem Aufheizen auf 75°C wurden 1 Teil Glyzerintriglyzidether zugesetzt und ca. 2 Stunden bei 75°C reagiert. Nach dieser Zeit wurden 70 Teile Harnstoff und 30 Teile N-Vinylcaprolactam zugesetzt und 0,15 Teile eines Azoinitiators auf Basis von 2,2'-Azobis-(amidino-propan)-dihydrochlorid zugesetzt. Die Reaktionsmischung wurde auf 75°C während 2 Stunden gehalten. Es entstand eine viskose, gelbliche Lösung. Nach dem Abkühlen lag die Brookfieldviskosität mit #3 / 20°C 100/min bei 500 bis 700 mPas.

Die Produkte wurden mit feinteiligem Calciumcarbonat an einem Pilotcoater gefahren. Die Geschwindigkeit lag bei 1.300 m/min. Die Zusammensetzung der Produkte sowie die erhaltenen Ergebnisse sind in der nachfolgenden Tabelle dargestellt

**Tabelle**

| **Bestandteil** | **Stand der Technik** | **Beispiel 1** |
|---|---|---|
| Setacarb HG-ME¹⁾ | 100 | 100 |
| Sterocell D²⁾ | 0,08 | - |
| PvOH 4-98 | 0,4 | 0,4 |
| Baystal P8100³⁾ | 10 | 10 |
| Tinopal ABP 4⁴⁾ | 0,5 | 0,5 |
| NaOH | 0.08 | 0.05 |
| Polymer nach Bsp. 1 | - | - |
| Polymer nach Bsp. 2 | - | 0,5 |
| **Eigenschaften** | | |
| Festkörpergehalt (%) | 66 | 66 |
| Brookfieldviskosität (100/min m*Pa*sec) | 1200 | 700 |
| pH-Wert | 8,9 | 8,9 |
| Anpressdruck [mm] | 3,5 | 1,9 |
| Auftrag [g/m²] | | 12 |

| | | |
|---|---|---|
| ¹⁾ ultrafeines natürliches Calciumcarbonat Partikelgröße 99% < 2µm; Omya AG | | |
| ²⁾ Polyacrylatverdicker BASF AG | | |
| ³⁾ Styrol-butadienlatex; Polymerlatex | | |
| ⁴⁾ Stilbentetracarbonsäure-Aufheller, Ciba AG | | |

Die Versuchspapiere nach Beispiel 1 konnten mit deutlich geringerem Anpressdruck von 60 kN/m statt 90 kN/m auf einen Lehmanngtanzwert von 75 satiniert werden.

Eine copolymere vemetzte Lewisbase mit Monomeren mit unterschiedlichem starkem Donorcharakter zeigte besonders günstige rheologische Eigenschaften in Verbindung mit 100 % natürlichem Calciumcarbonat.

## Patentansprüche

1. Pfropfpolymeres das sich von Proteinen ableitet, die mit ethylenisch ungesättigten Monomeren, die Amid- und/oder Aminogruppen enthalten, gepfropft worden sind und das mit einer polyfunktionellen Epoxidverbindung und/oder mit einer polyfunktionellen Aziridinverbindung und/oder mit Trichlortriazin und/oder mit Dichlorhydroxytriazin teilvemetzt ist.

2. Pfropfpolymeres nach Anspruch 1, **dadurch gekennzeichnet, dass** das Protein eine Kollagenstruktur aufweist.

3. Pfropfpolymeres nach Anspruch 1, **dadurch gekennzeichnet, dass** das Pfropfpolymere sich von Sojaprotein, Kasein oder insbesondere von Gelatine ableitet, die mit Acrylsäureamiden, Methacrylsäureamiden, Acrylsäureaminoalkylestern, Methacrylsäureaminoalkylestem oder mit Gemischen dieser Monomeren gepfropft worden sind.

4. Pfropfpolymeres nach Anspruch 1, **dadurch gekennzeichnet, dass** das Pfropfpolymere sich von Sojaprotein, Kasein oder Gelatine ableitet, die mit Lactamen enthaltend ethylenisch ungesättigte Gruppen gepfropft worden sind.

5. Pfropfpolymeres nach Anspruch 3,**dadurch gekennzeichnet, dass** das Lactam enthaltend ethylenisch ungesättigte Gruppen ausgewählt wird aus der Gruppe bestehend aus N-Vinylcaprolactam und N-Vinylpyrrolidon.

6. Pfropfpolymeres nach Anspruch 1, **dadurch gekennzeichnet, dass** die polyfunktionelle Epoxidverbindung ein di-, tri- oder tetrafunktioneller Glycidether ist, der abgeleitet wird von zwei-, drei- oder vierwertigen Alkoholen oder Phenolen.

7. Pfropfpolymeres nach Anspruch 6, **dadurch gekennzeichnet, dass** die polyfunktionelle Epoxidverbindung ausgewählt wird aus der Gruppe bestehend aus dem Di- oder Triglycidether des Glycerins, Diglycidether des Ethylenglykols, des Bisphenols A, des Bisphenols F oder des Hydrochinons.

8. Pfropfpolymeres nach Anspruch 6, **dadurch gekennzeichnet, dass** die polyfunktionelle Epoxidverbindung ausgewählt wird aus der Gruppe bestehend aus einem Polyglycidether des Pentaerythrits, Trimethylolpropans, Sorbits oder Mannits.

9. Streichmasse für bedruckbare Papierbahnen in Form einer wässrigen Dispersion von Pigmenten und Hilfsstoffen mit einem Feststoffanteil von 50 bis 80 Gew.%, worin die Streichmasse mindestens ein teilvemetztes Pfropfpolymeres nach Anspruch 1 enthält.

10. Streichmasse nach Anspruch 9, **dadurch gekennzeichnet, dass** diese ein lösliches und Hydroxylgruppen enthaltendes Polymeres, insbesondere Polyvinylalkohol und/oder Stärke, enthält.

11. Streichmasse nach Anspruch 9, **dadurch gekennzeichnet, dass** diese als Pigment Kaolin oder insbesondere Calciumcarbonat enthält.

12. Verwendung der teilvernetzten Pfropfpolymeren nach Anspruch 1 als Schutzkolloide für Pigmentteilchen.

## Revendications

1. Polymère greffé qui dérive de protéines qui ont été greffées avec des monomères à insaturation éthylénique contenant des groupes amide et/ou amino, le polymère étant partiellement réticulé avec un composé époxydique polyfonctionnel et/ou avec un composé d'aziridine polyfonctionnelle et/ou avec de la trichlorotriazine et/ou de la dichlorohydroxytriazine.

2. Polymère greffé selon la revendication 1, **caractérisé en ce que** la protéine présente une structure collagénique.

3. Polymère greffé selon la revendication 1, **caractérisé en ce que** le polymère greffé dérive de la protéine du soja, de la caséine ou en particulier de gélatine, qui ont été greffés par des acrylamides, des méthacrylamides, des acrylates d'aminoalkyle, des méthacrylates d'aminoalkyle ou des mélanges de ces monomères.

4. Polymère greffé selon la revendication 1, **caractérisé en ce que** le polymère greffé dérive de la protéine du soja, de la caséine ou de la gélatine, qui ont été greffés par des lactames contenant des groupes à insaturation éthylénique.

5. Polymère greffé selon la revendication 3, **caractérisé en ce que** le lactame contenant des groupes à insaturation éthylénique est choisi dans l'ensemble consistant en le N-vinylcaprolactame et la N-vinylpyrrolidone.

6. Polymère greffé selon la revendication 1, **caractérisé en ce que** le composé époxydique polyfonctionnel est un éther glycidique di-, tri- ou tétrafonctionnel, qui dérive de di-, de tri- ou de tétraalcools ou de phénols.

7. Polymère greffé selon la revendication 6, **caractérisé en ce que** le composé époxydique polyfonctionnel est choisi dans l'ensemble consistant en les éthers di-et triglycidiques du glycérol, l'éther diglycidique de l'éthylèneglycol, du bisphénol A, du bisphénol F ou de l'hydroquinone.

8. Polymère greffé selon la revendication 6, **caractérisé en ce que** le composé époxydique polyfonctionnel est choisi dans l'ensemble consistant en un éther polyglycidique du pentaérythritol, du triméthylolpropane, du sorbitol ou du mannitol.

9. Sauce de couchage pour feuilles continues de papier imprimables sous forme d'une dispersion aqueuse de pigments et d'adjuvants ayant une teneur en extrait sec de 50 à 80 % en poids, la sauce de couchage contenant au moins un polymère greffé partiellement réticulé selon la revendication 1.

10. Sauce de couchage selon la revendication 9, **caractérisée en ce qu'**elle contient un polymère soluble et contenant des groupes hydroxyle, en particulier du poly(alcool vinylique) et/ou de l'amidon.

11. Sauce de couchage selon la revendication 9, **caractérisée en ce qu'**elle contient en tant que pigment du kaolin ou en particulier du carbonate de calcium.

12. Utilisation des polymères greffés partiellement réticulés selon la revendication 1 en tant que colloïdes protecteurs pour particules pigmentaires.

## Claims

1. Graft polymer which is derived from proteins which have been grafted with ethylenically unsaturated monomers which contain amido and/or amino groups and which has been partly crosslinked with a polyfunctional epoxide compound and/or with a polyfunctional aziridine compound and/or with trichlorotriazine and/or with dichlorohydroxytriazine.

2. Graft polymer according to Claim 1, **characterized in that** the protein has a collagen structure.

3. Graft polymer according to Claim 1, **characterized in that** it is derived from soybean protein or casein or in particular from gelatin, which have been grafted with acrylamides, methacrylamides, aminoalkyl acrylates, aminoalkyl methacrylates or mixtures of these monomers.

4. Graft polymer according to Claim 1, **characterized in that** it is derived from soybean protein, casein or gelatin, which have been grafted with lactams containing ethylenically unsaturated groups.

5. Graft polymer according to Claim 3, **characterized in that** the lactam containing ethylenically unsaturated groups is selected from the group consisting of N-vinylcaprolactam and N-vinylpyrrolidone.

6. Graft polymer according to Claim 1, **characterized in that** the polyfunctional epoxide compound is a di-, tri- or tetrafunctional glycidyl ether which is derived from di-, tri- or tetrahydric alcohols or phenols.

7. Graft polymer according to Claim 6, **characterized in that** the polyfunctional epoxide compound is selected from the group consisting of the di- or triglycidyl ethers of glycerol and diglycidyl ethers of ethylene glycol, of bisphenol A, of bisphenol F and of hydroquinone.

8. Graft polymer according to Claim 6, **characterized in that** the polyfunctional epoxide compound is selected from the group consisting of polyglycidyl ethers of pentaerythritol, of trimethylolpropane, of sorbitol and of mannitol.

9. Coating material for printable paper webs in the form of an aqueous dispersion of pigments and assistants having a solids content of from 50 to 80% by weight, wherein the coating material contains at least one partly crosslinked graft polymer according to Claim 1.

10. Coating material according to Claim 9, **characterized in that** it contains a soluble polymer containing hydroxyl groups, in particular polyvinyl alcohol and/or starch.

11. Coating material according to Claim 9, **characterized in that** it contains kaolin or in particular calcium carbonate as a pigment.

12. Use of the partly crosslinked graft polymer according to Claim 1 as protective colloid for pigment particles.
